# EUROPÄISCHE PATENTSCHRIFT

(11) **EP 0 525 639 B1**
(45) Veröffentlichungstag und Bekanntmachung des Hinweises auf die Patenterteilung: **31.01.1996**
(21) Anmeldenummer: 92112583.7
(22) Anmeldetag: 23.07.1992
(51) Int. Cl.: C09D 127/06, C09D 131/04, C08J 9/30, D06N 7/00, C09D 5/18

(54) **Beschichtungsmittel zur Herstellung von wasserdichten, dampfdurchlässigen und flammverzögernden Beschichtungen**
Coating composition for the preparation of waste impermeable, vapour permeable, and flame retardant coatings
Composition de revêtement pour la préparation de revêtements ignifuges, perméables à la vapeur, étanches à l'eau

(30) Priorität: 24.07.1991 DE 4124560
(43) Veröffentlichungstag der Anmeldung: 03.02.1993
(73) Patentinhaber: WACKER-CHEMIE GMBH, D-81737 München (DE); DU PONT DE NEMOURS INTERNATIONAL S.A., CH-1218 Le Grand-Saconnex (Genève) (CH)
(72) Erfinder: Wierer, Konrad Alfons, Dr., W-8401 Sengkofen (DE); Serafini, Franco, L-3366 Lendelange (LU)

(56) Entgegenhaltungen:
- WO-A-84/04489
- WO-A-90/00967
- FR-A- 2 135 782
- NL-A- 6 603 836
- NL-A- 7 003 759
- US-A- 4 239 563

## Beschreibung

Die Erfindung betrifft Beschichtungsmittel zur Herstellung von wasserdichten, dampfdurchlässigen und flammverzögernden Beschichtungen, Verfahren zur Herstellung von damit beschichteten textilen Trägermaterialien, mit dem Beschichtungsmittel beschichtete textile Trägermaterialien sowie deren Verwendung.

Bisher wurden im Bautenschutz gegen das Eindringen von Wasser Spinnvliese aus Polypropylenfaser, Polyesterfaser oder Glasfaser mit Bitumen und ähnlichen Teerprodukten beschichtet, um reißfeste, wasserabstoßende Bahnen zu erhalten. Nachteilig bei diesen Materialien ist, daß bei geringer Wasser-dichtigkeit (nach DIN 53886 200 mm Wassersäule) auch der Durchlaß von Wasserdampf relativ gering ist (nach DIN 53122/1 100 g/m·Tag).

Aus der EP-A 64630 sind flammhemmende, halogenfreie Formmassen auf Basis von Ethylencopolymerisaten, Bitumen, rotem Phosphor und Al(OH)₃ bekannt, die zur Herstellung von Abdichtungsbahnen eingesetzt werden können.

Aus der EP-B 18691 (US-A 4452850) sind Dachabdeckbahnen aus einem beidseitig PVC-beschichteten Gewebe bekannt. Nachteilig bei dieser Beschichtung ist die sehr niedrige Wasserdampfdurchlässigkeit von 8 m/g·Tag und die Weichmachermigration.

Die DE-A 3200824 betrifft ebenfalls mit Weichmacher-haltigem PVC beschichtete textile Trägermaterialien mit den obengenannten Nachteilen. Zur Flammhemmung wurden Gewebe aus flammhemmend modifizierter Polyesterfaser eingesetzt.

In der DE-A 2124036 (CA-A 924037) wird eine flammfeste Zubereitung aus einem Ethylen/Vinylchlorid/Acrylamid-Copolymerisat und einem Ammoniumpolyphosphat beschrieben, die als Bindemittel zur Imprägnierung von Faservliesen verwendet werden kann.

Die DE-A 2452369 (CA-A 1052924) beschreibt flammhemmende Polymerlatices auf der Basis von Vinylchlorid/α-Olefin/Bis-hydrocarbyl-vinyl-phosphonat, die zur Beschichtung unter anderem von Faservliesen eingesetzt werden können. Die beschichteten Faservliese dürften nur eine geringe Wasserdampfdurchlässigkeit aufweisen.

Die DE-A 3017019 (US-A 4288486) beschreibt ein folienartiges Abdeckmaterial auf der Basis einer Glasfasermatte, welche auf mindestens einer Seite mit einer Schicht eines mechanisch aufgeschäumten und dann geschmolzenen und zusammengedrückten Vinylpolymeren (vorzugsweise Polyvinylchlorid) bedeckt ist.

In der EP-A 176849 (AU-A 8547976) wird erwähnt, daß zur Verbesserung der flammhemmenden Wirkung anorganische Feststoffteilchen in die Trägerbahnen für Dachbahnen eingearbeitet werden können. Die Wirkung dieser Teilchen beruht auf der Bildung einer festen, gerüstartigen verkohlenden Schicht. Die Beschichtung ist darauf ausgerichtet, das Einbrennen von Löchern in die Dachbahn durch fliegende Glut zu verhindern.

Es bestand daher die Aufgabe ein Beschichtungsmittel zur Verfügung zu stellen, das sich zur Herstellung von flammhemmenden Beschichtungen, insbesonders von textilen Trägermaterialien, mit hoher Wasserdichtigkeit bei hoher Dampfdurchlässigkeit eignet. Eine weitere Aufgabe bestand darin, ein Verfahren zur Herstellung damit beschichteter Textilien zur Verfügung zu stellen, wobei die beschichteten Textilien, bei niederem Flächengewicht und hoher mechanischer Festigkeit, dem obengenannten Anforderungsprofil bezüglich Flammhemmung, Wasserdichtigkeit und Dampfdurchlässigkeit genügen sollten.

Gegenstand der Erfindung ist ein Beschichtungsmittel zur Herstellung von wasserdichten, dampfdurchlässigen und flammverzögernden Beschichtungen enthaltend
A) eine wäßrige Dispersion mit einem Festgehalt von 30 bis 70 Gew% eines Vinylchlorid-Copolymeren mit 20 bis 90 Gew% Vinylchlorid, bezogen auf das Gesamtgewicht des Copolymeren,
   10 bis 80 Gew%, bezogen auf das Gesamtgewicht des Copolymeren, eines oder mehrerer Comonomeren aus der Gruppe der (Meth)acrylsäureester von Alkoholen mit 1 bis 10 C-Atomen, der Vinylester von gesättigten aliphatischen Carbonsäuren mit 2 bis 10 C-Atomen, der α-Olefine und 0 bis 10 Gew%, bezogen auf das Gesamtgewicht des Copolymeren, eines oder mehrerer ethylenisch ungesättigter funktioneller Comonomere,
   oder eine wäßrige Dispersion mit einem Festgehalt von 30 bis 70 Gew% eines Vinylacetat-Ethylen-Copolymeren mit 10 bis 40 Gew% Ethylen, bezogen auf das Gesamtgewicht des Copolymeren, und
   0 bis 10 Gew%, bezogen auf das Gesamtgewicht des Copolymeren, eines oder mehrerer ethylenisch ungesättigter funktioneller Comonomere,
B) 5 bis 70 Gew%, bezogen auf den Feststoffgehalt der Copolymerdispersion, eines Flammschutzhilfsmittels aus der Gruppe der Antimonoxide, Phosphorester, Zinkborate, Metalloxidhydrate, Metallhydroxide oder Chlorparaffine,
C) 0 bis 20 Gew%, bezogen auf den Feststoffgehalt der Copolymerdispersion, eines Vernetzers,
D) 0.5 bis 20 Gew%, bezogen auf den Feststoffgehalt der Copolymerdispersion, eines Schaumstabilisators,
E) 0 bis 10 Gew%, bezogen auf den Feststoffgehalt der Copolymerdispersion, eines Verdickungsmittels.

Ein weiterer Gegenstand der Erfindung ist ein Verfahren zur Herstellung von wasserdicht, dampfdurchlässig und flammhemmend beschichteten Trägermaterialien, wobei
a) das obengenannte Beschichtungsmittel, gegebenenfalls unter Zusatz eines Vernetzers und/oder eines Verdickungsmittels, mechanisch zu einem Stabilschaum aufgeschäumt wird,
b) der Schaum auf das gewebte, gewirkte oder vliesartige Trägermaterial ein- oder beidseitig aufgetragen und bei einer Temperatur von 60 bis 180°C getrocknet wird, und
c) gegebenenfalls nach der Trocknung die Schaumschicht komprimiert wird.

Bevorzugte Comonomere für die Vinylchlorid-Copolymeren sind aus der Gruppe der Methacrylsäureester oder Acrylsäureester von Alkoholen mit 1 bis 10 C-Atomen Methylmethacrylat, Methylacrylat, Ethylmethacrylat, Ethylacrylat, Isopropylmethacrylat, Isopropylacrylat, tert.-Butylacrylat, n-Butylacrylat und Ethylhexylacrylat; aus der Gruppe der Vinylester von gesättigten aliphatischen Carbonsäuren mit 2 bis 10 C-Atomen Vinylacetat, Isopropenylacetat, Vinylpropionat, Vinyllaurat und Versaticsäure^{R}-Vinylester mit 9 bis 10 C-Atomen (Vinylester von gesättigten α-verzweigten Monocarbonsäuren, Handelsprodukt der Fa. Shell); aus der Gruppe der Olefine Ethylen.

Gegebenenfalls können die erfindungsgemäßen Copolymerisate als Basismonomere noch bis zu 10 Gew%, bezogen auf das Copolymerisat, ethylenisch ungesättigte, funktionelle Comonomere enthalten. Beispiele hierfür sind Mono- oder Dicarbonsäuren wie Methacrylsäure, Acrylsäure oder Fumarsäure und deren Amide, hydroxyfunktionelle Monomere wie Hydroxyethylacrylat, 2-Hydroxypropylacrylat oder N-Methylol(meth)acrylamid, sowie sulfonatfunktionelle Monomere wie Vinylsulfonat oder Methacrylamidopropansulfonsäure. Vorzugsweise werden 1 bis 5 Gew% N-Methylol(meth)acrylamid, bezogen auf das VC- oder VAcE-Copolymerisat, eingesetzt.

Besonders bevorzugte Copolymerisate A sind Copolymerisate auf der Basis von Vinylchlorid-Ethylen-Copolymeren mit einem Ethylen-Gehalt von vorzugsweise 10 bis 50 Gew% und einem Vinylchlorid-Gehalt von 50 bis 90 Gew%, jeweils bezogen auf das Gesamtgewicht des Copolymerisats A;
Copolymerisate auf der Basis von Vinylchlorid-Vinylester-Copolymeren, insbesonders Vinylchlorid-Vinylacetat-Copolymeren, mit einem Vinylchlorid-Gehalt von vorzugsweise 20 bis 50 Gew% und einem Vinylester-Gehalt von 50 bis 80 Gew%, jeweils bezogen auf das Gesamtgewicht des Copolymerisats A; Copolymerisate auf der Basis von Vinylchlorid-Vinylester-Ethylen-Copolymeren, insbesonders Vinylchlorid-Vinylacetat-Ethylen-Copolymere mit einem Vinylchlorid-Gehalt von 50 bis 70 Gew%, einem Vinylacetat-Gehalt von 10 bis 30 Gew% und einem Ethylen-Gehalt von 5 bis 15 Gew%, jeweils bezogen auf das Gesamtgewicht des Copolymerisats A;
Copolymerisate auf der Basis von Vinylchlorid-Vinylester-(Meth)acrylsäureester-Copolymeren mit einem Vinylchlorid-Gehalt von 20 bis 50 Gew%, einem Vinylester-Gehalt von 50 bis 80 Gew% und einem (Meth)acrylsäureester-Gehalt von 5 bis 20 Gew%, insbesonders Copolymerisate mit Butylacrylat, Methylmethacrylat und/oder Ethylhexylacrylat;
Copolymerisate auf der Basis der genannten Vinylchlorid/Ethylen-, Vinylacetat/Ethylen-, Vinylchlorid/Vinylester- und Vinylchlorid/Vinylester/(Meth)acrylat-Polymerisate mit einem Gehalt von bis zu 10 Gew% an N-Methylol(meth)acryl-amid, Acrylsäure, Vinylsulfonat und/oder 2-Hydroxy-propylacrylat, insbesonders Vinylchlorid-Ethylen-N-Methylolmethacrylamid-Copolymere mit einem Vinylchlorid-Gehalt von 60 bis 90 Gew%, einem Ethylen-Gehalt von 10 bis 40 Gew% und einem N-Methylolmethacrylamid-Gehalt von 1 bis 5 Gew%, jeweils bezogen auf das Gesamtgewicht des Copolymerisats A. Die Angaben in Gew% addieren sich dabei jeweils auf 100 Gew% im Copolymerisat.

Am meisten bevorzugte Copolymerisate A sind Copolymerisate auf der Basis von Vinylchlorid-Ethylen-Copolymeren mit einem Ethylen-Gehalt von 10 bis 40 Gew% und einem Vinylchlorid-Gehalt von 60 bis 90 Gew%, jeweils bezogen auf das Gesamtgewicht des Copolymerisats A.

Die Herstellung der wäßrigen Copolymerisatdispersionen erfolgt vorzugsweise nach dem Emulsionspolymerisationsverfahren und wird in den üblichen Polymerisationsgefäßen durchgeführt. Die Polymerisation kann diskontinuierlich oder kontinuierlich, mit oder ohne Verwendung von Saatlatices, unter Vorlage aller oder einzelner Bestandteile des Reaktionsgemisches, oder unter teilweiser Vorlage und Nachdosierung der oder einzelner Bestandteile des Reaktionsgemisches, oder nach dem Dosierverfahren ohne Vorlage durchgeführt werden. Alle Dosierungen erfolgen vorzugsweise im Maße des Verbrauchs der jeweiligen Komponente.

Die Emulsionspolymerisation wird in einem Temperaturbereich von 0 bis 100°C durchgeführt und mit den für die Emulsionspolymerisation üblicherweise eingesetzten Methoden eingeleitet. Die Initiierung erfolgt mittels der üblichen wasserlöslichen Radikalbildner, die vorzugsweise in Mengen von 0.01 bis 3.0 Gew%, bezogen auf das Gesamtgewicht der Monomeren, eingesetzt werden. Beispiele hierfür sind Ammonium- und Kaliumpersulfat, -peroxodisulfat; Wasserstoffperoxid; Alkylhydroperoxide, wie tert.-Butylhydroperoxid; Kalium-, Natrium- und Ammoniumperoxodiphosphat; Azoverbindungen, wie Azobisisobutyronitril oder Azobiscyanovaleriansäuren Gegebenenfalls können die genannten radikalischen Initiatoren auch in bekannter Weise mit 0.01 bis 0.5 Gew%, bezogen auf das Gesamtgewicht der Monomeren, Reduktionsmittel kombiniert werden. Geeignet sind zum Beispiel Alkaliformaldehydsulfoxylate. Bei der Redoxinitiierung werden dabei vorzugsweise eine oder beide Redox-Katalysatorkomponenten während der Polymerisation dosiert.

Als Dispergiermittel können alle üblicherweise bei der Emulsionspolymerisation verwendeten Emulgatoren und Schutzkolloide eingesetzt werden. Vorzugsweise werden 1 bis 6 Gew%, bezogen auf das Gesamtgewicht der Monomeren, an Emulgator eingesetzt. Geeignet sind beispielsweise anionische Tenside, wie Alkylsulfate mit einer Kettenlänge von 8 bis 18 C-Atomen, Alkyl- und Alkylarylethersulfate mit 8 bis 18 C-Atomen im hydrophoben Rest und bis zu 40 Ethylen- oder Propylenoxideinheiten, Alkyl- oder Alkylarylsulfonate mit 8 bis 18 C-Atomen, Ester und Halbester der Sulfobernsteinsäure mit einwertigen Alkoholen oder Alkylphenolen. Geeignete nichtionische Tenside sind beispielsweise Alkylpolyglykolether oder Alkylarylpolyglykolether mit 8 bis 40 Ethylenoxideinheiten.

Gegebenenfalls können Schutzkolloide, vorzugsweise in Mengen bis zu 15 Gew%, bezogen auf das Gesamtgewicht der Monomeren, eingesetzt werden. Beispiele hierfür sind Vinylalkohol/Vinylacetat-Copolymere mit einem Gehalt von 80 bis 100 Mol% Vinylalkoholeinheiten, Polyvinylpyrrolidone mit einem Molekulargewicht von 5000 bis 400000, Hydroxyethylcellulosen mit einem Substitutionsgradbereich von 1.5 bis 3.

Der für die Polymerisation gewünschte pH-Bereich, der im allgemeinen zwischen 2.5 und 10, vorzugsweise 3 und 8, liegt, kann in bekannter Weise durch Säuren, Basen oder übliche Puffersalze, wie Alkaliphosphate oder Alkalicarbonate, eingestellt werden. Zur Molekulargewichtseinstellung können bei der Polymerisation die üblicherweise verwendeten Regler, zum Beispiel Mercaptane, Aldehyde und Chlorkohlenwasserstoffe zugesetzt werden.

Geeignete Flammschutzhilfsmittel B) sind beispielsweise Antimontrioxid Sb₂O₃, Antimonpentoxid Sb₂O₅, Aluminiumoxidhydrat Al₂O₃·3H₂O, Zinkborat Zn(BO₂)₂·2H₂O bzw. 2ZnO·(B₂O₃)₃·(H₂O)_{3,5}, Ammonium-ortho- bzw. -polyphosphat NH₄H₂PO₄ bzw. (NH₄PO₃)ₙ sowie Chlorparaffine. Vorzugsweise wird Aluminiumoxidhydrat eingesetzt, besonders bevorzugt in einer Menge von 20 bis 50 Gew%, bezogen auf den Feststoffanteil der Copolymerdispersion. Bei der Verwendung einer Vinylacetat/Ethylen-Copolymerdispersion in der Beschichtungsmittelzusammensetzung werden vorzugsweise Chlorparaffine eingesetzt, insbesonders chlorierte Kohlenwasserstoffe mit einem Chloranteil von 40 bis 60 Gew%.

In einer bevorzugten Ausführungsform enthält das erfindungsgemäße Beschichtungsmittel noch 2 bis 7 Gew%, bezogen auf den Feststoffgehalt der Copolymerdispersion, eines Vernetzers, vorzugsweise aus der Gruppe der Melaminharze, der Phenolformaldehydharze und Harnstofformaldehydharze, welcher in Pulverform oder bevorzugt in Form der wäßrigen Lösungen der härtbaren Ausgangskondensate zugesetzt wird. Besonders bevorzugt sind die Ausgangskondensate der Melaminformaldehydharze.

Das Beschichtungsmittel enthält in einer bevorzugten Ausführungsform Schaumstabilisatoren in einer Menge von 2 bis 15 Gew%, bezogen auf den Feststoffgehalt der Copolymerdispersion. Geeignete grenzflächenaktive Mittel sind die Salze höherer Alkylsulfate, Alkylbenzolsulfonate, Dialkylsulfosuccinate, Polyoxyethylenalkylphenylether, Polyoxyethylenacylester oder Fettsäuresalze. Besonders bevorzugt werden Alkylbenzolsulfonate, Alkylsulfate und Fettsäuresalze von Fettsäuregemischen von Fettsäuren unterschiedlicher Kettenlänge, insbesonders die Ammoniumsalze der Fettsäuren.

Zur Verbesserung der Schaumstabilität bei Auftragung und Trocknung des Beschichtungsmittels in Schaumform können auch organische Verdickungsmittel zugesetzt werden. Vorzugsweise werden Polyvinylalkohole, wasserlösliche Cellulosederivate wie Methylcellulose, Methylhydroxyethylcellulose, Hydroxyethylcellulose, Hydropropylcellulose, Polyurethane sowie Polyvinylpyrrolidone und Ammoniumsalze der Polyacrylsäuren eingesetzt. Besonders bevorzugt werden die Ammoniumsalze der Polyacrylsäure eingesetzt.

Weiter kann das Beschichtungsmittel Zusatzstoffe wie Pigmente oder Mittel zur Verbesserung der Wasserdichtigkeit, wie Paraffinöle in Mengen bis 60 Gew%, Silikone in Mengen bis 3 Gew% oder Fluorkohlenwasserstoffe in Mengen bis 3 Gew%, jeweils bezogen auf den Feststoffgehalt der Copolymerdispersion, enthalten. Gegebenenfalls kann auch roter Phosphor, vorzugsweise in Mengen von 5 bis 100 Gew%, bezogen auf den Feststoffgehalt der Copolymerdispersion, zur Verbesserung des Flammschutzes zugesetzt werden.

Vorzugsweise wird die Viskosität des Beschichtungsmittels durch Zugabe von Verdickungsmittel und/oder Wasser auf 500 bis 3000 mPas (Brookfield, 20 Upm, Raumtemperatur) eingestellt.

Zur Herstellung der Beschichtungsmittel-Zusammensetzung wird vorzugsweise die Copolymerdispersion A) vorgelegt und gegebenenfalls der Vernetzer C) und das Verdickungsmittel E) unter Rühren zugemischt. Zuletzt wird der Schaumstabilisator D) zugegeben.

Das erfindungsgemäße Beschichtungsmittel eignet sich zur Beschichtung von gewebten, gewirkten oder vliesartigen textilen Trägermaterialien zu deren wasserdichten, dampfdurchlässigen und flammhemmenden Ausrüstung. Vorzugsweise werden Trägermaterialien aus synthetischen Fasern verwendet. Beispiele hierfür sind Polyethylen-, Polypropylen-, Polyester- und Glasfasern. Besonders bevorzugt werden Rohvliese, insbesonders Spinnvliese, aus den genannten synthetischen Fasern mit einem Flächengewicht von 50 bis 300 g/m.

Das Beschichtungsmittel wird in Schaumform auf das Trägermaterial aufgetragen, da dadurch die Dampfdurchlässigkeit erheblich verbessert wird. Hierzu wird das Beschichtungsmittel nach Zusatz des Schaumstabilisators und gegebenenfalls von Verdickungsmittel und weiterer Zusatzstoffe mechanisch aufgeschäumt. Dies kann in einem Schaummixgerät unter Eintrag hoher Scherkräfte erfolgen. Eine weitere Möglichkeit besteht darin in einem Schaumgenerator durch Einblasen von Druckluft aufzuschäumen. Vorzugsweise wird mittels eines Schaumgenerators aufgeschäumt.

Das geschäumte Beschichtungsmittel wird dann mit üblichen Beschichtungseinrichtungen, beispielsweise einem Streichrakel oder anderen Schaumauftragungsgeräten, auf das Trägermaterial aufgetragen. Die Auftragung kann ein- oder beidseitig erfolgen; vorzugsweise erfolgt sie beidseitig. Die Auftragungsmenge pro Seite beträgt von 20 bis 150 g/m, insbesonders 50 bis 90 g/m. Bei Mengen unterhalb 20 g/m erhält man zwar guten Dampfdurchlaß bei niedrigen Kosten, aber ungenügenden Flammschutz und schlechte Wasserdichtigkeit. Bei Mengen oberhalb 150 g/m treten beim Trocknen Rißbildungen auf.

Nach der Auftragung wird der Schaum bei geringer Lufströmung im Trockenkanal, beispielsweise durch Infraroterhitzung, mit einem Temperaturgradienten von 60 auf 180°C, vorzugsweise 60 auf 130°C getrocknet.

Zur Verbesserung der flammhemmenden Wirkung wird in einer bevorzugten Ausführungsform der Schaum beidseitig in einer Schichtdicke von 0.3 bis 1.0 mm aufgetragen. Besonders bevorzugt wird der Schaum in unterschiedlicher Schichtdicke auf die beiden Seiten des Trägermaterials aufgetragen. Bei der letztgenannten Ausführungsform wird der Schaum auf der Unterseite des Trägermaterials in einer dünnen Schicht von maximal 0.4 mm Schichtdicke, vorzugsweise mit einem Luftrakel, so aufgetragen, daß er möglichst tief in die Hohlräume des Vlieses zwischen die Fasern eindringt. Auf der Oberseite dagegen wird der Schaum zur Verbesserung der Wasserdichtigkeit, vorzugsweise mit einem Rollenrakel, insbesonders in einer Schicht von 0.3 bis 1.0 mm Schichtdicke, aufgetragen.

In einer besonders bevorzugten Ausführungsform kann zur Verbesserung der Abriebfestigkeit, der flammhemmenden Wirkung und der Wasserdichtigkeit die Schaumschicht nach der Trocknung komprimiert und dabei teilweise in das Vlies eingepreßt werden. Die Komprimierung kann beispielsweise durch Heißkalandrierung in einem Temperaturbereich von 100 bis 180°C und bei einem Liniendruck von 2 bis 300 daN/cm erfolgen, wobei es vorteilhaft ist, die Heißkalandrierung zwischen 2 glatten Rollen, einer aus Stahl und einer aus einem weicheren Material, beispielsweise Polyamid oder Gummi, durchzuführen. Insbesonders wird nur die Schaumschicht auf der Oberseite des textilen Trägermaterials komprimiert. Gegebenenfalls kann zur Verbesserung der Wasserdichtigkeit und der Abriebfestigkeit eine weitere Beschichtung, vorzugsweise in einer Menge von 5 bis 30 g/m, mit unverschäumter Copolymerdispersion erfolgen.

Mit der erfindungsgemäßen Verfahrensweise erhält man bei der bevorzugten Schaumbeschichtung, beispielsweise von Polypropylen-Vliesstoffen, Materialien mit sehr hoher Wasserdichtigkeit (DIN 53886: > 300 mm Wassersäule), mit sehr hoher Wasserdampfdurchlässigkeit (DIN 53122/1: > 350 g/m·d) und einer ausgezeichneten Flammverzögerung, die der Klassifizierung nach DIN 4102 B2 entspricht.

Die mit dem erfindungsgemäßen Beschichtungsmittel beschichteten textilen Trägermaterialien eignen sich zur Verwendung im Bautenschutz als Dachbahnen oder Abdichtbahnen, beispielsweise unter Dachziegel oder Fassadenwänden aus Holz. Sie eignen sich auch zur Verwendung als Schutzplanen für Geräte und Materialien und für den Einsatz im Geotextilbereich.

Das nachfolgende Beispiel dient zur weiteren Erläuterung der Erfindung.

### Beispiel 1: (Herstellung des Beschichtungsmittels)

370.3 g einer wäßrigen Dispersion (Festgehalt: 54 Gew%) eines Vinylchlorid-Ethylen-Copolymeren mit einem Ethylen-Gehalt von 30 Gew% wurden vorgelegt und unter Rühren 4.4 g Melamin-Formaldehyd-Harz (Cymel 327 der Fa. Dyno-Cyanamid) zugegeben. Anschließend wurden 12.2 g Polyacrylsäure (Latekoll D der BASF AG) und 200 g Wasser zugegeben. Unter starkem Rühren wurden 100 g Aluminiumoxidhydrat (Martinal OL 111 der Fa. Omnya) zugemischt und anschließend 275 g Wasser zugegeben. Schließlich wurden noch 26.3 g eines FettsäuresalzGemisches (Plex 6112S der Röhm GmbH) und 6.0 g Schwarzpigment (Imperon Schwarz der Hoechst AG) zugemischt. Das Beschichtungsmittel hatte eine Viskosität von 2600 mPa·s.

### Beispiel 2: (Herstellung der Vliesbeschichtung)

Das Beschichtungsmittel gemäß Beispiel 1 wurde in einem Mathismixer mechanisch aufgeschäumt (Schaumgewicht siehe Tabelle 1) und der Schaum auf ein ca. 100 g/m schweres Polypropylen-Spinnvlies (Typar, Fa. DuPont) aufgetragen. Auf der Unterseite des Spinnvlieses erfolgte der Schaumauftrag mittels eines Luftrakels in der in Tabelle 1 beschriebenen Auftragsmenge. Die Oberseite des Vlieses wurde mit einem Schaumauftragungsgerät mit Walzenrakel (Variopress der Fa. Zimmer) in der in Tabelle 1 beschriebenen Schaumhöhe und Auftragsmenge beschichtet. Anschließend wurden die beschichteten Vliese in einem 9.6 m langen Heizkanal mit geringer Oberluft in drei Stufen bei 70°C, 90°C und 130°C getrocknet. Die auf die Oberseite des Vlieses aufgebrachte Schaumschicht wurde schließlich mit einem Heißkalander bei 120°C, mit einem Liniendruck von 3.5 kN und einer Bahngeschwindigkeit von 1m/min komprimiert.

### Anwendungstechnische Prüfung:

Die gemäß Beispiel 2 hergestellten beschichteten Vliese wurden auf ihre Wasserdichtigkeit, Wasserdampfdurchlässigkeit und Flammhemmung hin mit den nachfolgenden Methoden geprüft. Die Ergebnisse sind in Tabelle 1 aufgeführt.

### Wasserdichtigkeit (DIN 53886):

Zur Bestimmung der Wasserdichtigkeit wird ein beschichtetes Vlies mit 13 cm Durchmesser zwischen 2 Dichtungsringen auf einer Öffnung verschraubt. Unter der Öffnung wird eine blasenfreie Wassersäule aufgebaut, die mit einem wassergefüllten Vorratsbehälter verbunden ist, welcher kontinuierlich höher gefahren wird, wobei der Wasserdruck gegen den Prüfkörper kontinuierlich erhöht wird. Als Maß für die Wasserdichtigkeit wird in Tabelle 1 die Wassersäulenhöhe angegeben, bei der der dritte Wassertropfen durch das Vlies hindurchdringt.

### Wasserdampfdurchlässigkeit (DIN 53122):

Zur Bestimmung der Wasserdampfdurchlässigkeit wurde eine Schale mit Absorptionsmittel mit dem Vlies bedeckt und mit Wachs an den Rändern verschlossen. Die durch das Vlies hindurchdiffundierte Wasserdampfmenge, nach 24 Stunden Lagerung bei einem Normklima von 25°C und 75 % Luftfeuchtigkeit, wurde über die Gewichtszunahme der Schale bestimmt und auf eine Vliesfläche von 1 m hochgerechnet. In Tabelle 1 ist die Wasserdampfdurchlässigkeit in g/m·d angegeben.

### Brandverhalten (DIN 4102 Teil 1):

Zur Prüfung des Brandverhaltens wird eine Probe des senkrecht stehenden beschichteten Vlieses mit einem um 45° geneigten Brenner mit einer 20 mm langen Flamme an der Unterkante beflammt. Um der Baustoffklasse B2 der DIN 4102 zu genügen, darf die Flamme eine 15 cm von der unteren Kante entfernte Marke innerhalb von 30 Sekunden nicht erreichen. Die in der Tabelle 1 angegebenen Werte sind Mittelwerte aus 5 Messungen und geben die Zeit bis zum Erlöschen der Flamme an, ohne daß diese die Marke erreicht hat.

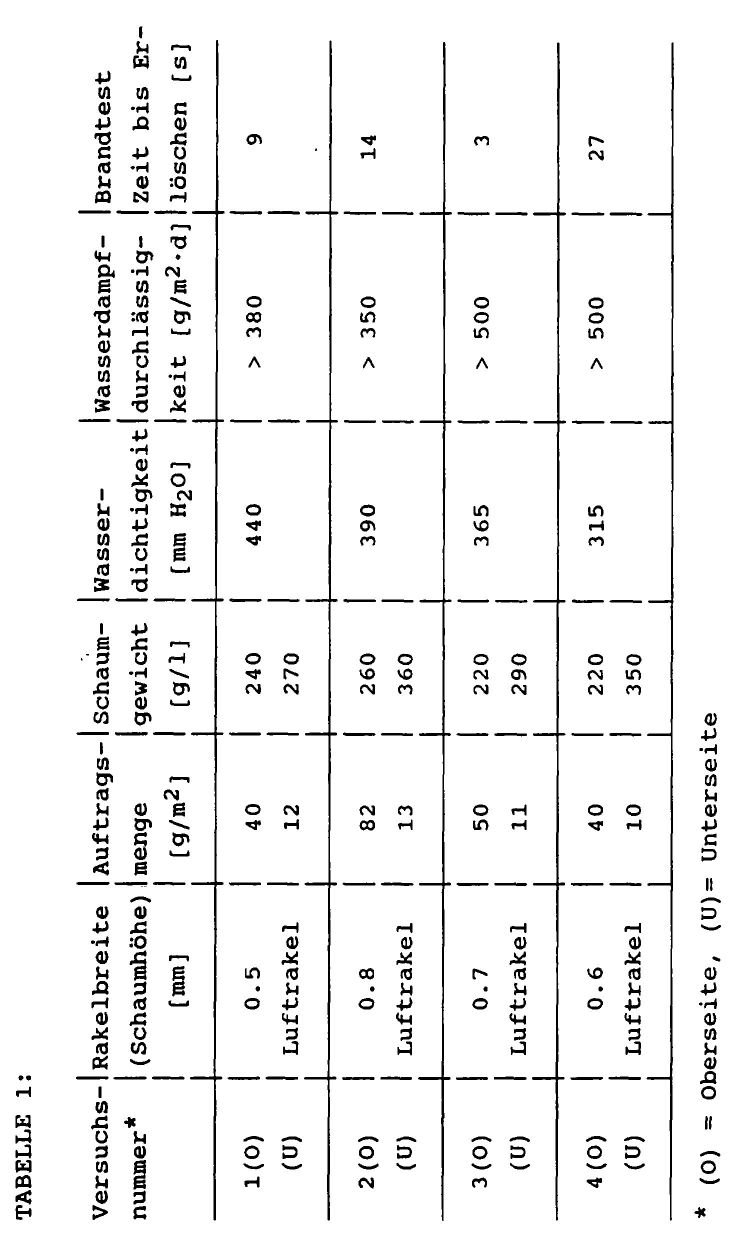

## Patentansprüche

1. Verfahren zur Herstellung eines wasserdicht, dampfdurchlässig und flammverzögernd beschichteten textilen Trägermaterials durch Beschichtung mit einem vernetzbaren Beschichtungsmittel enthaltend
A) eine wäßrige Dispersion mit einem Festgehalt von 30 bis 70 Gew% eines Vinylchlorid-Copolymeren mit 20 bis 90 Gew%, bezogen auf das Gesamtgewicht des Copolymeren, Vinylchlorid,
10 bis 80 Gew%, bezogen auf das Gesamtgewicht des Copolymeren, eines oder mehrerer Comonomeren aus der Gruppe der (Meth)acrylsäureester von Alkoholen mit 1 bis 10 C-Atomen, der Vinylester von gesättigten aliphatischen Carbonsäuren mit 2 bis 10 C-Atomen, der α-Olefine und 0 bis 10 Gew%, bezogen auf das Gesamtgewicht des Copolymeren, eines oder mehrerer ethylenisch ungesättigter funktioneller Comonomere,
oder eine wäßrige Dispersion mit einem Festgehalt von 30 bis 70 Gew% eines Vinylacetat-Ethylen-Copolymeren mit 10 bis 40 Gew% Ethylen, bezogen auf das Gesamtgewicht des Copolymeren, und
0 bis 10 Gew%, bezogen auf das Gesamtgewicht des Copolymeren, eines oder mehrerer ethylenisch ungesättigter funktioneller Comonomere,
B) 5 bis 70 Gew%, bezogen auf den Feststoffgehalt der Copolymerdispersion, eines Flammschutzhilfsmittels aus der Gruppe der Antimonoxide, Phosphorester, Zinkborate, Metalloxidhydrate, Metallhydroxide oder Chlorparaffine,
C) 0 bis 20 Gew%, bezogen auf den Feststoffgehalt der Copolymerdispersion, eines Vernetzers,
D) 0.5 bis 20 Gew%, bezogen auf den Feststoffgehalt der Copolymerdispersion, eines Schaumstabilisators,
E) 0 bis 10 Gew%, bezogen auf den Feststoffgehalt der Copolymerdispersion, eines Verdickungsmittels, wobei
a) das Beschichtungsmittel mechanisch zu einem Stabilschaum aufgeschäumt wird,
b) der Schaum auf das gewebte, gewirkte oder vliesartige Trägermaterial ein- oder beidseitig aufgetragen und bei einer Temperatur von 60 bis 180°C getrocknet wird, und
c) nach der Trocknung die Schaumschicht komprimiert wird.

2. Verfahren nach Anspruch 1, dadurch gekennzeichnet, daß als Copolymerisate A Copolymerisate auf der Basis von Vinylchlorid-Ethylen-Copolymeren mit einem Ethylen-Gehalt von 10 bis 50 Gew% und einem Vinylchlorid-Gehalt von 50 bis 90 Gew%, Copolymerisate auf der Basis von Vinylchlorid-Vinylacetat-Copolymeren, mit einem Vinylchlorid-Gehalt von 20 bis 50 Gew% und einem Vinylacetat-Gehalt von 50 bis 80 Gew%, Copolymerisate auf der Basis von Vinylchlorid-Vinylacetat-Ethylen-Copolymere mit einem Vinylchlorid-Gehalt von 50 bis 70 Gew%, einem Vinylacetat-Gehalt von 10 bis 30 Gew% und einem Ethylen-Gehalt von 5 bis 15 Gew%, eingesetzt werden.

3. Verfahren nach Anspruch 2, dadurch gekennzeichnet, daß als Copolymerisate A Copolymerisate auf der Basis von Vinylchlorid-Ethylen-Copolymeren mit einem Ethylen-Gehalt von 10 bis 40 Gew% und einem Vinylchlorid-Gehalt von 60 bis 90 Gew%, oder Vinylchlorid-Ethylen-N-Methylolmethacrylamid-Copolymere mit einem Vinylchlorid-Gehalt von 60 bis 90 Gew%, einem Ethylen-Gehalt von 10 bis 40 Gew% und einem N-Methylolmethacrylamid-Gehalt von 1 bis 5 Gew%, jeweils bezogen auf das Gesamtgewicht des Copolymerisats A, eingesetzt werden.

4. Verfahren nach Anspruch 1, 2 oder 3, dadurch gekennzeichnet, daß als Flammschutzhilfsmittel 20 bis 50 Gew%, bezogen auf den Feststoffanteil der Copolymerdispersion, Aluminiumoxidhydrat eingesetzt wird.

5. Verfahren nach Anspruch 1, dadurch gekennzeichnet, daß als Copolymerisat A ein Vinylacetat-Ethylen-Copolymer mit einem Ethylengehalt von 10 bis 40 Gew%, bezogen auf das Gesamtgewicht des Copolymerisats A, und als Flammschutzhilfsmittel chlorierte Kohlenwasserstoffe mit einem Chloranteil von 40 bis 60 Gew% eingesetzt werden.

6. Verfahren nach Anspruch 1 bis 5, dadurch gekennzeichnet, daß als Vernetzer 2 bis 7 Gew%, bezogen auf den Feststoffgehalt der Copolymerdispersion, Melaminharz, Phenolformaldehydharz oder Harnstofformaldehydharz eingesetzt werden.

7. Verfahren nach Anspruch 6, dadurch gekennzeichnet, daß als Vernetzer die Ausgangskondensate der Melaminformaldehydharze eingesetzt werden.

8. Verfahren nach Anspruch 1 bis 7, dadurch gekennzeichnet, daß als Schaumstabilisatoren 2 bis 15 Gew%, bezogen auf den Feststoffanteil der Copolymerdispersion, Alkylbenzolsulfonate, Alkylsulfate oder Ammoniumsalze von Fettsäuregemischen von Fettsäuren unterschiedlicher Kettenlänge eingesetzt werden.

9. Verfahren nach Anspruch 1 bis 8, dadurch gekennzeichnet, daß als Verdickungsmittel die Ammoniumsalze der Polyacrylsäure eingesetzt werden.

10. Verfahren nach Anspruch 1 bis 9, dadurch gekennzeichnet, daß zur Verbesserung der Wasserdichtigkeit Mittel wie Paraffinöle, Silikone oder Fluorkohlenwasserstoffe zugesetzt werden.

11. Verfahren nach Anspruch 1 bis 10, dadurch gekennzeichnet, daß die Viskosität des Beschichtungsmittels durch Zugabe von Verdickungsmittel und/oder Wasser auf 500 bis 3000 mPas eingestellt wird.

12. Verfahren nach Anspruch 1 bis 11, dadurch gekennzeichnet, daß ein gewebtes, gewirktes oder vliesartiges textiles Trägermaterial aus synthetischen Fasern beschichtet wird.

13. Verfahren nach Anspruch 12, dadurch gekennzeichnet, daß Spinnvliese aus Polyethylen-, Polypropylen-, Polyester- oder Glasfaser beschichtet werden.

14. Verfahren nach Anspruch 1 bis 13, dadurch gekennzeichnet, daß die Schaumauftragung einseitig oder beidseitig und pro Seite jeweils in einer Menge von 20 bis 150 g/m und mit einer Schichtdicke von 0.3 bis 1.0 mm erfolgt.

15. Verfahren nach Anspruch 1 bis 14, dadurch gekennzeichnet, daß der Schaum in unterschiedlicher Schichtdicke auf die beiden Seiten des Trägermaterials aufgetragen wird, wobei der Schaum auf die Unterseite des Trägermaterials in einer dünnen Schicht von maximal 0.4 mm Schichtdicke und auf die Oberseite in einer Schicht von 0.3 bis 1.0 mm Schichtdicke aufgetragen wird.

16. Verfahren nach Anspruch 1 bis 15, dadurch gekennzeichnet, daß eine weitere Beschichtung mit unverschäumter Copolymerdispersion aufgetragen wird.

17. Verfahren nach Anspruch 1 bis 16, dadurch gekennzeichnet, daß die Schaumbeschichtung durch Heißkalandrierung des beschichteten Trägermaterials bei einer Temperatur von 100 bis 180°C und bei einem Liniendruck von 2 bis 300 daN/cm komprimiert wird.

18. Verfahren nach Anspruch 17, dadurch gekennzeichnet, daß nur die Schaumschicht auf der Oberseite des textilen Trägermaterials komprimiert wird.

19. Wasserdicht, dampfdurchlässig und flammverzögernd beschichtetes textiles Trägermaterial herstellbar nach einem Verfahren gemäß Anspruch 1 bis 18.

20. Verwendung von beschichteten Trägermaterialien gemäß einem der obengenannten Ansprüche im Bautenschutz als Dachbahnen oder Abdichtbahnen.

21. Verwendung von beschichteten Trägermaterialien gemäß einem der obengenannten Ansprüche als Schutzplanen und für den Einsatz im Geotextilbereich.

## Claims

1. Process for manufacturing a watertight, vapour-permeable and flame-retardant coated textile support material by coating with a crosslinkable coating composition containing
A) an aqueous dispersion having a solids content of from 30 to 70% by weight of a vinyl chloride copolymer with from 20 to 90% by weight of vinyl chloride, based on the total weight of the copolymer,
from 10 to 80% by weight, based on the total weight of the copolymer, of one or more comonomers from the group of the (meth)acrylic esters of alcohols of from 1 to 10 carbon atoms, the vinyl esters of saturated aliphatic carboxylic acids of from 2 to 10 carbon atoms, and the α-olefins, and
from 0 to 10% by weight, based on the total weight of the copolymer, of one or more ethylenically unsaturated functional comonomers,
or an aqueous dispersion having a solids content of from 30 to 70% by weight of a vinyl acetate-ethylene copolymer with from 10 to 40% by weight of ethylene, based on the total weight of the copolymer, and
from 0 to 10% by weight, based on the total weight of the copolymer, of one or more ethylenically unsaturated functional comonomers,
B) from 5 to 70% by weight, based on the solids content of the copolymer dispersion, of a flameproofing agent from the group of the antimony oxides, phosphoric esters, zinc borates, metallic oxide hydrates, metal hydroxides or chloroparaffins,
C) from 0 to 20% by weight, based on the solids content of the copolymer dispersion, of a crosslinker,
D) from 0.5 to 20% by weight, based on the solids content of the copolymer dispersion, of a foam stabilizer,
E) from 0 to 10% by weight, based on the solids content of the copolymer dispersion, of a thickener, by
a) foaming the coating composition by mechanical means into a stable foam,
b) applying the foam to the woven, knitted or nonwoven support material on one or both sides and drying at a temperature of from 60 to 180°C, and
c) after drying, compressing the foam layer.

2. Process according to Claim 1, characterized in that the copolymers A are copolymers based on vinyl chloride-ethylene copolymers with an ethylene content of from 10 to 50% by weight and a vinyl chloride content of from 50 to 90% by weight, copolymers based on vinyl chloride-vinyl acetate copolymers with a vinyl chloride content of from 20 to 50% by weight and a vinyl acetate content of from 50 to 80% by weight, or copolymers based on vinyl chloride-vinyl acetate-ethylene copolymers with a vinyl chloride content of from 50 to 70% by weight, a vinyl acetate content of from 10 to 30% by weight and an ethylene content of from 5 to 15% by weight.

3. Process according to Claim 2, characterized in that the copolymers A are copolymers based on vinyl chloride-ethylene copolymers with an ethylene content of from 10 to 40% by weight and a vinyl chloride content of from 60 to 90% by weight, or vinyl chloride-ethylene-N-methylolmethacrylamide copolymers with a vinyl chloride content of from 60 to 90% by weight, an ethylene content of from 10 to 40% by weight and an N-methylolmethacrylamide content of from 1 to 5% by weight, each percentage being based on the total weight of copolymer A.

4. Process according to Claim 1, 2 or 3, characterized in that the flameproofing agent comprises from 20 to 50% by weight, based on the solids content of the copolymer dispersion, of aluminium oxide hydrate.

5. Process according to Claim 1, characterized in that copolymer A is a vinyl acetate-ethylene copolymer with an ethylene content of from 10 to 40% by weight, based on the total weight of copolymer A, and the flameproofing agent comprises chlorinated hydrocarbons having a chlorine content of from 40 to 60% by weight.

6. Process according to any one of Claims 1 to 5, characterized in that the crosslinker comprises from 2 to 7% by weight, based on the solids content of the copolymer dispersion, of melamine resin, phenolformaldehyde resin or urea-formaldehyde resin.

7. Process according to Claim 6, characterized in that the crosslinker comprises the starting condensates of melamine-formaldehyde resins.

8. Process according to any of Claims 1 to 7, characterized in that the foam stabilizer comprises from 2 to 15% by weight, based on the solids content of the copolymer dispersion, of alkylbenzenesulphonates, alkyl sulphates or ammonium salts of mixtures of fatty acids of different chain length.

9. Process according to any of Claims 1 to 8, characterized in that the thickener comprises the ammonium salts of polyacrylic acid.

10. Process according to any of Claims 1 to 9, characterized in that agents such as paraffin oils, silicones or fluorocarbons are added to improve the watertightness.

11. Process according to any of Claims 1 to 10, characterized in that the viscosity of the coating composition is set to 500-3000 mPas by adding thickeners and/or water.

12. Process according to any of Claims 1 to 11, characterized in that the coated woven, knitted or nonwoven textile support material is made of synthetic fibres.

13. Process according to Claim 12, characterized in that spunbondeds composed of polyethylene, polypropylene, polyester or glass fibre are coated.

14. Process according to any of Claims 1 to 13, characterized in that the foam is applied on one or both of the sides and on each side at a rate of from 20 to 150 g/m and with a layer thickness of from 0.3 to 1.0 mm.

15. Process according to any of Claims 1 to 14, characterized in that the foam is applied to both sides of the support material in different layer thicknesses, to the underside of the support material in a thin layer not more than 0.4 mm in thicknesses and to the upper side in a thickness of from 0.3 to 1.0 mm.

16. Process according to any of Claims 1 to 15, characterized in that a further coat of unfoamed copolymer dispersion is applied.

17. Process according to any of Claims 1 to 16, characterized in that the foam coating is compressed by hot calendering the coated support material at a temperature of from 100 to 180°C under a nip pressure of from 2 to 300 daN/cm.

18. Process according to Claim 17, characterized in that only the foam layer on the upper surface of the textile support material is compressed.

19. Watertight, vapour-permeable and flame-retardant coated textile support material preparable by a process according to any of Claims 1 to 18.

20. The use of coated support materials according to any one of the abovementioned claims in building protection as roofing or sealing felts.

21. The use of coated support materials according to any one of the abovementioned claims as protective covers and for use in the geotextile sector.

## Revendications

1. Procédé de préparation d'un matériau support textile revêtu, étanche à l'eau, perméable à la vapeur et retardateur de flammes par revêtement au moyen d'un agent de revêtement réticulable, contenant
A) une dispersion aqueuse avec une teneur en matières solides de 30 à 70% en poids, d'un copolymère de chlorure de vinyle avec 20 à 90% en poids, sur base du poids total du copolymère, de chlorure de vinyle,
10 à 80% en poids, sur base du poids total du copolymère, d'un ou de plusieurs comonomères choisis parmi le groupe des esters d'acide (méth)acrylique d'alcools avec 1 à 10 atomes de carbone, des esters vinyliques d'acides carboxyliques aliphatiques insaturés avec 2 à 10 atomes de carbone, des α-oléfines et
0 à 10% en poids, sur base du poids total du copolymère, d'un ou de plusieurs comonomères insaturés à fonction éthylénique,
ou une dispersion aqueuse avec une teneur en matières solides de 30 à 70% en poids, d'un copolymère acétate de vinyle-éthylène avec 10 à 40% en poids d'éthylène, sur base du poids total du copolymère, et
0 à 10% en poids, sur base du poids total du copolymère, d'un ou de plusieurs comonomères insaturés à fonction éthylénique,
B) 5 à 70% en poids, sur base de la teneur en matières solides de la dispersion de copolymère, d'un retardateur de combustion choisi parmi le groupe des oxyde d'antimoine, ester phosphorique, borate de zinc, oxyde métallique hydraté, hydroxyde métallique ou chloroparaffine,
C) 0 à 20% en poids, sur base de la teneur en matières solides de la dispersion de copolymère, d'un agent de réticulation,
D) 0,5 à 20% en poids, sur base de la teneur en matières solides de la dispersion de copolymère, d'un agent stabilisant les mousses,
E) 0 à 10% en poids, sur base de la teneur en matières solides de la dispersion de copolymère, d'un agent épaississant,
où
a) l'agent de revêtement est moussé mécaniquement en une mousse stable,
b) la mousse est déposée sur le matériau support tissé, tricoté ou de type voile, d'un côté ou sur les deux côtés, et séché à une température de 60 à 180°C, et
c) après le séchage, la couche de mousse est comprimée.

2. Procédé suivant la revendication 1, caractérisé en ce que l'on introduit comme mélange copolymère A, un mélange copolymère à base de copolymère chlorure de vinyle-éthylène avec une teneur en éthylène de 10 à 50% en poids et une teneur en chlorure de vinyle de 50 à 90% en poids, un mélange copolymère à base de copolymère chlorure de vinyle-acétate de vinyle avec une teneur en chlorure de vinyle de 20 à 50% en poids et une teneur en acétate de vinyle de 50 à 80% en poids, un mélange copolymère à base de copolymère chlorure de vinyle-acétate de vinyle-éthylène avec une teneur en chlorure de vinyle de 50 à 70% en poids, et une teneur en acétate de vinyle de 10 à 30% en poids et une teneur en éthylène de 5 à 15% en poids.

3. Procédé suivant la revendication 2, caractérisé en ce que l'on introduit comme mélange copolymère A, un mélange copolymère à base de copolymère chlorure de vinyle-éthylène avec une teneur en éthylène de 10 à 40% en poids et une teneur en chlorure de vinyle de 60 à 90% en poids, ou un copolymère chlorure de vinyle-éthylène-N-méthylolméthacrylamide avec une teneur en chlorure de vinyle de 60 à 90% en poids, une teneur en éthylène de 10 à 40% en poids et une teneur en N-méthylolméthacrylamide de 1 à 5% en poids, sur base, chaque fois, du poids total du mélange copolymère A.

4. Procédé suivant la revendication 1, 2 ou 3, caractérisé en ce que l'on introduit comme retardateur de combustion, 20 à 50% en poids, sur base de la quantité de matières solides dans la dispersion copolymère, d'oxyde d'aluminium hydraté.

5. Procédé suivant la revendication 1, caractérisé en ce que l'on introduit comme mélange copolymère A, un copolymère acétate de vinyle-éthylène avec une teneur en éthylène de 10 à 40% en poids, sur base du poids total du mélange copolymère A et comme retardateur de combustion, un hydrocarbure chloré avec une teneur en chlore de 40 à 60% en poids.

6. Procédé suivant les revendications 1 à 5, caractérisé en ce que, comme agent de réticulation, on introduit 2 à 7% en poids, sur base de la teneur en matières solides dans la dispersion copolymère, de résine mélamine, de résine phénol-formaldéhyde ou de résine urée-formaldéhyde.

7. Procédé suivant la revendication 6, caractérisé en ce que l'on introduit comme agent de réticulation, les condensats initiaux des résines mélamine-formaldéhyde.

8. Procédé suivant les revendications 1 à 7, caractérisé en ce que comme stabilisant des mousses, on introduit 2 à 15% en poids, sur base de la quantité de matières solides dans la dispersion copolymère, de benzènesulfonate d'alcoyle, sulfate d'alcoyle ou des sels d'ammonium de mélanges d'acides gras à longueur de chaîne différente.

9. Procédé suivant les revendications 1 à 8, caractérisé en ce que comme agent épaississant, on introduit le sel d'ammonium de poly(acide acrylique).

10. Procédé suivant les revendications 1 à 9, caractérisé en ce que l'on ajoute de l'huile de paraffine, du silicone ou un hydrocarbure fluoré pour améliorer l'étanchéité.

11. Procédé suivant les revendications 1 à 10, caractérisé en ce que la viscosité de l'agent de revêtement est ajustée à 500 à 3000 mPas par addition de l'agent épaississant et/ou d'eau.

12. Procédé suivant les revendications 1 à 11, caractérisé en ce que l'on recouvre un matériau support textile tissé, tricoté ou de type voile, constitué de fibres synthétiques.

13. Procédé suivant la revendication 12, caractérisé en ce que l'on recouvre des voiles filés de fibres de polyéthylène, polypropylène, polyester ou de verre.

14. Procédé suivant les revendications 1 à 13, caractérisé en ce que le dépôt de mousse est réalisé sur un côté ou les deux côtés et en une quantité, par côté, de 20 à 150 g/m et avec une épaisseur de couche de 0,3 à 1,0 mm.

15. Procédé suivant les revendications 1 à 14, caractérisé en ce que l'on dépose la mousse avec des épaisseurs de couches différentes sur les deux côtés du matériau support, où la mousse est déposée en couche mince avec une épaisseur d'au plus 0,4 mm sur la face inférieure du matériau support et en une couche avec une épaisseur de 0,3 à 1,0 mm sur la face supérieure.

16. Procédé suivant les revendications 1 à 15, caractérisé en ce que l'on dépose un autre revêtement avec une dispersion copolymère non moussée.

17. Procédé suivant les revendications 1 à 16, caractérisé en ce que le revêtement de mousse est comprimé par calandrage à chaud du matériau support revêtu, à une température de 100 à 180°C et à une pression en ligne de 2 à 300 daN/cm.

18. Procédé suivant la revendication 17, caractérisé en ce que la couche de mousse est seulement comprimée sur le côté supérieur du matériau support textile.

19. Matériau support textile revêtu, étanche à l'eau, perméable à la vapeur et retardateur de flammes pouvant être préparé par un procédé suivant les revendications 1 à 18.

20. Utilisation de matériaux supports revêtus suivant l'une quelconque des revendications précédentes dans la protection des édifices comme panneaux de toiture ou panneaux d'étanchéité.

21. Utilisation de matériaux supports revêtus suivant l'une quelconque des revendications précédentes comme panneaux protecteurs et pour la mise en oeuvre dans le domaine géotextile.
